# NEUE EUROPÄISCHE PATENTSCHRIFT

(11) **EP 0 947 897 B2**
(45) Veröffentlichungstag und Bekanntmachung des Hinweises auf die Entscheidung über den Einspruch: **01.04.2015**
(45) Hinweis auf die Patenterteilung: 17.11.2004
(21) Anmeldenummer: 99104457.9
(22) Anmeldetag: 05.03.1999
(51) Int. Cl.: G05B 19/042, G05B 19/418

(54) **Bussystem, insbesondere für eine Hausautomatisierungseinrichtung**
Bussystem, in particular for a home automation device
Système de bus, en particulier pour un dispositif de domotique

(30) Priorität: 01.04.1998 DE 19814611
(43) Veröffentlichungstag der Anmeldung: 06.10.1999
(73) Patentinhaber: ROBERT BOSCH GMBH, 70442 Stuttgart (DE)
(72) Erfinder: Roehlk, Hermann, 71665 Vaihingen (DE); Peters, Oliver, 70469 Stuttgart (DE); Amann, Michael, 71711 Murr (DE); Ullmann, Stefan, 71254 Ditzingen (DE)

(56) Entgegenhaltungen:
- EP-A- 0 802 465
- EP-A1- 0 549 005
- DE-A- 19 510 140
- DE-A1- 19 624 929
- US-A- 5 309 351
- US-A- 5 565 855
- US-A- 5 572 438
- US-A- 5 648 917
- 'Handbuch Visualisierung instabus EIB, Version 1.1', April 1995, SIEMENS AG
- 'Gebäudesystemtechnik mit instabus EIB, Siemens Technik', 1998, SIEMENS AG
- 'EIB Handbook, Issue EIB 2.1', Dezember 1993

## Beschreibung

Die Erfindung betrifft ein Bussystem, insbesondere für eine Hausautomatisierungseinrichtung, mit den im Oberbegriff des Anspruchs 1 genannten Merkmalen und ein Verfahren zum Betrieb des Bussystems mit den im Oberbegriff des Anspruchs 14 genannten Merkmalen.

### Stand der Technik

Es sind verschiedene Hausautomatisierungssysteme bekannt. Derartige Hausautomatisierungssysteme verbinden verschiedene Funktionseinrichtungen in einem Haus oder einer Wohnung, beispielsweise Beleuchtung, Jalousienenantriebe, Heizung, Alarmanlage und ähnliche Einrichtungen. Die bekannten Systeme weisen eine getrennte Übertragung von Signalen zur Steuerung und zur Energiezufuhr auf.

Eine Steuersignalzuführung kann beispielsweise durch eine separate Leitungsführung (TP, Twisted Pair), eine Signalaufmodulierung auf die Energieversorgung (PL, Power Line) oder über Funksignale (RF, Radio Frequency) oder Infrarot erfolgen. Bekannt sind weiterhin Systeme, die eine 230-Volt-Wechselstromleitung als Datenleitung verwenden. Hierbei wird ein moduliertes Hochfrequenzsignal der 50-Hertz-Wechselspannung überlagert, so daß keine separaten Steuerleitungen mehr notwendig sind. Die bekannten Hausautomatisierungssysteme werden zentral über einen sogenannten Bus gesteuert, der die Steuersignale zu den einzelnen Bedienmodulen führt und für eine korrekte Zuordnung zu den jeweiligen Adressaten sorgt.

Neben zentral gesteuerten sind auch dezentral gesteuerte Systeme bekannt. Beiden Systemen gemeinsam ist, daß Aktoren durch Sensoren angesteuert werden, was bei den dezentral gesteuerten Systemen durch eine direkte Verbindung und bei zentral gesteuerten Systemen über eine zentrale Steuerlogik erfolgt. Die systemfähigen Endgeräte (Aktoren) müssen einen sogenannten Buskoppler aufweisen, der eine Verbindung zum Bus ermöglicht. In einem dezentralen System wie beispielsweise dem EIB (European Installation Bus) müssen bei einer Installation und Inbetriebnahme die Buskoppler mit speziellen Programmen und spezifischen Kommunikationsbeziehungen programmiert werden. Bei den bekannten Bussystemen handelt es sich hierbei um Reiheneinbaugeräte für eine DIN-Hutschienenmontage sowie Geräte für den Einbau in Kabelkanäle.

Nachteilig an den bekannten Systemen ist eine komplizierte Programmierung bei einer Erweiterung um ein neues Endgerät (Aktor). Bei den bekannten Systemen wird dieses meist durch einen Installateur installiert und auch in Betrieb genommen. Alle Änderungen sind nur durch einen geschulten Installateur durchführbar.

Die EP 0 802 465 A3 offenbart ein elektrisches Hausgerät, das über eine am oder im Hausgerät angeordnete Schnittstelle an ein zu mehreren Hausgeräten geführtes, von einem einzigen zentralen Steuerrechner steuerbares Bussystems anschließbar ist. In der US 5,572,438 ist ein Energiemanagement- und Hausautomatisierungssystem beschrieben. Die US 5,648,917 offenbart eine Schaltung zur Überwachung von Geräten mit einer verteilten Datenbank.

### Vorteile der Erfindung

Das erfindungsgemäße Bussystem, insbesondere für eine Hausautomatisierungseinrichtung, mit den im Anspruch 1 genannten Merkmalen weist den Vorteil einer großen Variabilität auf, bei der ein Anwender, insbesondere ein privater Endkunde, jederzeit die Möglichkeit hat, ein bestehendes System mit geringem Aufwand zu erweitern und/oder zu modifizieren. Anders als bei bekannten Systemen, bei denen zu einer Erweiterung oder einer Modifizierung im Regelfall ein geschulter Installateur erforderlich ist, kann ein Anwender bei dem erfindungsgemäßen Bussystem alle zu einer Erweiterung notwendigen Programmierungen problemlos selbst vornehmen. Es können dabei Endgeräte geschaltet und bedient werden und deren Status abgefragt werden, was für den Anwender jederzeit überschaubar und transparent bleibt.

Insbesondere durch eine klare und übersichtliche Kommunikation zwischen Endgeräten, sogenannten Bedieneinheiten, und einem Funktionsmodul kann die Einfachheit des Systemes hervorgehoben werden. So weist ein zentrales Funktionsmodul eine Datenbank auf, deren Bestand auf die verschiedenen Bedieneinheiten über einen Datenbus so verteilt wird, dass bei einem geänderten Datenbestand diese Bedieneinheiten jederzeit über einen aktuellen Datenbestand verfügen. Dadurch entsteht eine redundante Verteilung der in der Datenbank gespeicherten Daten, das heißt eine erhöhte Sicherheit des Datenbestandes gegen Verlust und/oder gegen Zerstörung. Vorteilhaft ist hierbei insbesondere, daß eine neu angeschlossene Bedieneinheit nur einen minimalen Installationsaufwand erfordert, da durch automatische Aktualisierung des Datenbestandes aus dem Funktionsmodul dieses sofort einsatzbereit wird.

Unter einer Bedieneinheit beziehungsweise einem Endgerät wird in diesem Zusammenhang auch ein an ausgesuchter Stelle in einem Gebäude oder einer Wohnung positioniertes Modul verstanden, das beispielsweise einen einzelnen Sensor aufweisen kann und dessen Signale in Form von digitalen Daten über einen Datenbus dem Funktionsmodul zur Verfügung gestellt werden. Eine Bedieneinheit beziehungsweise ein Endgerät kann ebenso einen Aktor, beispielsweise zur Bedienung einer Fensterjalousie, oder mehrere Sensoren und/oder Aktoren enthalten. Unter dem Funktionsmodul wird in diesem Zusammenhang eine zentrale Recheneinheit mit einer Datenbank verstanden, die alle von den einzelnen Bedieneinheiten gelieferten Daten auswertet und in Abhängigkeit von den Sensordaten sowie von einem von einem Benutzer vorher festgelegten Programm die Aktoren ansteuert. Weiterhin kommen als Aktoren Meldesignalgeber an externe Busteilnehmer, wie beispielsweise Wachdienste, Feuermeldestellen und andere Einrichtungen in Frage.

Durch einen Aufbau der Datenbank aus einer Vielzahl kleiner logischer Einheiten, sogenannter Dateneinheiten (DE), wobei jeder Einheit einzelne sogenannte Status-Flags beziehungsweise Update-Flags zugeordnet sind, wird die notwendige Datenübertragung minimiert, das heißt, auch bei geringen Datenübertragungsraten erfolgt ein schneller Datenabgleich zwischen Funktionsmodul und den verschiedenen Bedieneinheiten. Vorteilhaft hierbei ist, daß eine Bedieneinheit zunächst die Update-Flags auslesen kann und sich dann nur die veränderten Datensätze holen muß.

Weiterhin ist vorteilhaft, daß durch eine vereinfachte Identifizierung von inkonsistenten Daten eine Reduzierung der Buslast sowie eine höhere Funktionssicherheit gewährleistet ist. Durch Verwendung eines Befehlssatzes, der es ermöglicht, Daten kontrolliert zu modifizieren, ist eine Änderung jederzeit im laufenden Systembetrieb möglich. Zu einer derartigen Realisierung wird ein Befehlsdekoder zur Verfügung gestellt, der auf den vorhandenen Systemroutinen aufsetzen kann und durch einen Befehlssatz eine Unabhängigkeit von der laufenden Programmversion erreichen kann. Durch individuelle Definition des Befehlssatzes kann eine derartige Kommunikation auch bei anderen Systemen, das heißt Nichtbedieneinheiten, zur Anwendung kommen. Durch individuelle Anmeldung jeder einzelnen Bedieneinheit bei der Datenbank kann deren Datenbestand durch jede Bedieneinheit verändert werden.

Vorteilhaft ist insbesondere, wenn das Funktionsmodul darüber hinaus eine spezielle Selbsttestfunktion aufweist, mit welcher die Funktionsfähigkeit des Systems jederzeit geprüft werden kann. Hierbei werden alle Ausgänge, alle Eingänge sowie die Kommunikationsverbindungen mit den Bedieneinheiten und der Speicher in regelmäßigen Abständen getestet.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1a: eine beispielhafte Systemstruktur eines Bussystems;
- Figur 1b: eine beispielhafte Struktur einer drahtlosen Anbindung an einen Datenbus und
- Figur 2: eine beispielhafte Struktur eines Kommunikationsvorganges im Datenbus.

### Beschreibung des Ausführungsbeispiels

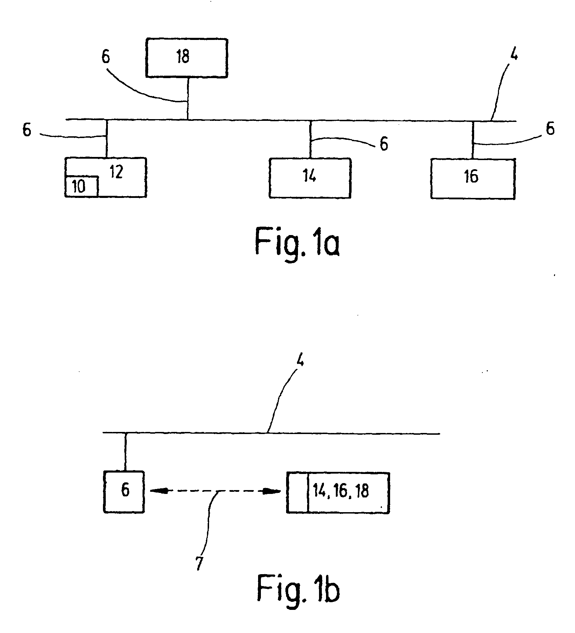

Figur 1a zeigt einen Ausschnitt einer Hausautomatisierungseinrichtung mit mehreren Bedieneinheiten und einer Datenbank. Erkennbar ist eine gemeinsame Busleitung, im folgenden als Datenbus 4 bezeichnet, mit mehreren Buskopplern 6, die jeweils zu einzelnen Bedieneinheiten 14, 16, 18 führen. Am Datenbus 4 ist weiterhin über einen Buskoppler 6 ein Funktionsmodul 12 angeschlossen, das einen unterbrechungsfreien Buszugriff aufweist. Das Funktionsmodul 12 weist ein integriertes Busmodul auf, das im wesentlichen aus einer Datenbank 10 besteht. Die verschiedenen Bedieneinheiten 14, 16, 18 können hierbei zeitgleich betrieben werden und das Funktionsmodul 12 kann wahlweise auch in einer der Bedieneinheiten integriert sein.

Wie Figur 1b verdeutlicht, können die Bedieneinheiten auch über eine drahtlose Verbindung an das eigentliche Bussystem angeschlossen sein. Die Kommunikation zwischen den Bedieneinheit 14, 16, 18 und dem Funktionsmodul 12 erfolgt hierbei über Infrarot-, Funk oder ähnliche drahtlose Verbindungen 7.

Um einen Konflikt bei gleichzeitigem Betrieb der Bedieneinheiten im Zugriff auf die Datenbank 10 zu vermeiden, ist ein spezielles Zugriffsprotokoll eingerichtet, so daß sichergestellt ist, daß immer nur eine der Bedieneinheiten 14, 16, 18 gleichzeitig Zugriff auf die Datenbank 10 hat.

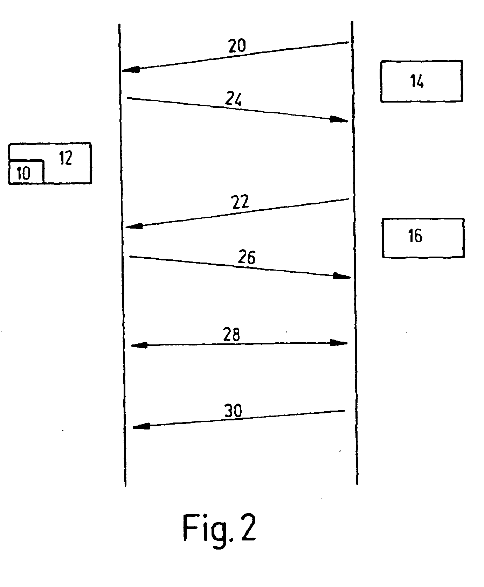

Figur 2 zeigt einen Kommunikationsablauf zwischen zwei Bedieneinheiten 14 und 16 und dem Funktionsmodul 12, der verdeutlicht, wie eine Kommunikationsberechtigung für eine Bedieneinheit vom Funktionsmodul abgefragt wird und entweder zu einer Freigabe oder zu einer Zurückweisung führt. Eine Bedieneinheit 14 sendet über den Datenbus 4 eine Anfrage 20 an das Funktionsmodul 12, ob eine Kommunikationsfreigabe erfolgen kann oder nicht. Kommuniziert die Datenbank 10 des Funktionsmoduls 12 gerade nicht mit einer anderen Bedieneinheit, erfolgt eine Freigabe 24 der Kommunikation an die Bedieneinheit 14. Eine Anfrage 22 einer anderen Bedieneinheit 16 während einer Kommunikation 28 zwischen Funktionsmodul 12 und Bedieneinheit 14 führt zu einer Zurückweisung 26 der Anfrage. Somit hat die Bedieneinheit 14 eine Kommunikationsberechtigung, die Bedieneinheit 16 jedoch nicht. Der Pfeil 30 verdeutlicht eine Beendigung der Kommunikation zwischen Funktionsmodul 12 und einer Bedieneinheit.

Eine derartige Abfrage und Freigabe von Kommunikationsberechtigungen verhindert effektiv eine mögliche Fehlleitung von Datenpaketen und somit eine Gefahr deren Zerstörung während der Kommunikation. In einem Standard-Ethernet für PC führt beispielsweise ein gleichzeitiger Sendevorgang mehrerer Stationen dazu, daß die Nachrichten zerstört werden und der Sendevorgang wiederholt werden muß.

In der Datenbank 10 des Funktionsmoduls 12 können dabei Daten wie Klartextnamen, Bereichszuordnungen, zentrale Zugriffcodes, Listen von bedienbaren Geräten, Beschreibungen von zusätzlichen Geräteeigenschaften und/oder sogenannte Szenarien abgelegt sein. Aufgrund einer üblicherweise relativ geringen Bandbreite der Übertragungskanäle der bekannten Hausbussysteme, die meist nicht mehr als 9600 Baud umfaßt, muß die Kommunikation zwischen Funktionsmodul 12 und Bedieneinheiten 14, 16, 18 über ein Verfahren ablaufen, bei dem der Datenbankbestand in jedem zum Bediensystem gehörenden Einzelgerät abgelegt ist.

Die Datenbank 10 stellt hierbei die Hauptdatenbank dar und befindet sich im dargestellten Ausführungsbeispiel im Funktionsmodul 12. Aufgabe des Funktionsmoduls 12 ist es, dafür zu sorgen, daß alle Datenbestände in den Bedieneinheiten 14, 16, 18 jederzeit konsistent gehalten werden. Eine derartige redundante Verteilung des Datenbestandes erhöht dessen Sicherheit gegen teilweisen oder vollständigen Datenverlust oder -zerstörung. Die Implementierung eines neuen Bediengerätes beziehungsweise einer neuen Bedieneinheit in eine bereits fertig installierte bestehende Anlage erfordert einen relativ geringen Installationsaufwand, da der Datenbestand umgehend aus dem Funktionsmodul 12 in die neu installierte Bedieneinheit geladen werden kann.

Der Bestand der Datenbank 10 ist in kleine logische Einheiten, sogenannte Dateneinheiten (DE), gegliedert wobei jeder Dateneinheit einzelne Statusbits (Flags) zugeordnet sind. Diese sogenannten Update-Flags kennzeichnen eine Veränderung der Datenbank 10. Ein Statuswert von "Null" (Update-Flag = 0) zeigt an, daß keine Veränderung der Dateneinheit erfolgt ist. Ein Statuswert von "Eins" (Update-Flag = 1) zeigt an, daß die Dateneinheit geändert wurde und neue Daten anliegen. Die Speicherung dieser Update-Flags kann sowohl in chronologischer Form, das heißt beispielsweise in einer Tabelle, wie auch in Form einer Matrix-Organisation erfolgen. Die logischen kleinen Dateneinheiten (DE) führen zu einer signifikanten Reduzierung der zu übertragenden Datenmengen. Jede Bedieneinheit kann die Update-Flags auslesen und ist dadurch in der Lage, nur die veränderten Datensätze in der Datenbank 10 abrufen zu müssen.

Die Datenbank 10 weist eine Vielzahl einzelner Datensätze auf, die untereinander abhängig sind und die einzelnen Funktion des Funktionsmoduls 12 exakt festlegen. Zur Konfiguration dieser Datensätze weist ein Betriebssystem Möglichkeiten auf, direkt auf jeden einzelnen Parameter zuzugreifen und diesen im laufenden Betrieb zu verändern. Insbesondere bei einer Parameteränderung im laufenden Betrieb kann durch einen Direktzugriff der Fall eintreten, daß die Daten inkonsistent werden, daß heißt unerwünschte Reaktionen beziehungsweise Funktionen auftreten können.

Um eine vereinfachte Identifizierung von inkonsistenten Daten zu ermöglichen und damit eine höhere Funktionssicherheit zu erreichen sowie um die Buslast zu reduzieren, wird ein Befehlssatz zur Verfügung gestellt, der es ermöglicht, Datensätze kontrolliert zu modifizieren. Dies kann auch im laufenden Systembetrieb erfolgen und die Realisierung setzt einen Befehlsdekoder voraus, der mit den Systemroutinen kommunizieren kann und diese ergänzt. Durch einen derartigen Befehlssatz wird zudem eine Unabhängigkeit von einer laufenden Programmversion erreicht.

So sind beispielsweise bei der Verwendung des EIB-Systems sogenannte EIB-Objekte bekannt. Das sind Datenstrukturen, auf die über Systemroutinen lesend oder schreibend zugegriffen werden kann. Die Datenbank 10 weist eine Struktur auf, die eine Kommunikation mit der Datenbank über einen Befehlssatz definiert. Der Zugriff auf die Datenstruktur (Befehl) kann immer nur von extern erfolgen. Das Funktionsmodul 12 wird selbst nicht aktiv.

Eine Kommunikation läuft in folgender Weise ab: Zunächst schreibt eine Bedieneinheit einen Befehl in die Datenstruktur mit einem Systemzugriff. Der Befehlstatus ist hierbei "Request" (Anfrage). Die Applikationssoftware des Funktionsmoduls 12 (Datenserver) erkennt diese Anfrage und bearbeitet den Befehl. Als nächstes schreibt das Funktionsmodul 12 eine Antwort in die Datenstruktur, die in einem Parametersatz abgelegt wird. Der Befehlsstatus hierbei ist "Response" (Antwort). Zuletzt liest die Bedieneinheit (Client) die Datenstruktur mit einem Systemzugriff aus. Im Funktionsmodul 12 ist eine Liste abgelegt, welche Bedieneinheiten im System verwendet werden. Jede einzelne Bedieneinheit wird in einer Liste geführt und muß angemeldet sein, um eine Zugriffssicherung zu ermöglichen, das heißt um die Datenbank nicht manipulieren zu können.

Der Datenbestand des Funktionsmoduls 12 kann durch jede Bedieneinheit verändert werden, was durch einen unterbrechungsfreien Zugang zu den Busdaten zu gewährleisten ist. Die spezifischen Einstellungen und Daten für alle Bedieneinheiten können beispielsweise zentral über eine Mikrocontrollerschaltung in Form eines DIN-Hutschienengerätes zur Verfügung gestellt werden.

Zusätzlich kann das Zentralmodul 12 noch folgende Bedien- und Anzeigeelemente enthalten: eine Betriebsanzeige, eine Fehleranzeige sowie eine Anzeige der Buskommunikation. Weiterhin kann im Funktionsmodul 12 eine spezielle Selbsttestfunktion vorgesehen sein, die in regelmäßigen Abständen die Eingänge, die Ausgänge, die Kommunikation mit den Bedieneinheiten und dem Bus und den Speicher testet.

## Patentansprüche

1. Bussystem, mit einem Datenbus zur Übertragung von Signalen zwischen wenigstens zwei mit dem Datenbus koppelbaren Modulen, insbesondere Bussystem einer Hausautomatisierungseinrichtung, wobei der Datenbus (4) mit wenigstens einem Funktionsmodul (12) und wenigstens einer, wenigstens einen Sensor und/oder wenigstens einen Aktor aufweisenden, Bedieneinheit (14, 16, 18) gekoppelt ist, wobei das Funktionsmodul (12) einen unterbrechungsfreien Zugriff auf den Datenbus (4) aufweist, wobei das Funktionsmodul (12) eine Datenbank (10) aufweist, wobei in der Datenbank (10) Beschreibungen von zusätzlichen Geräteeigenschaften abgelegt sind, **dadurch gekennzeichnet, dass** die Bedieneinheiten (14, 16, 18) und das Funktionsmodul (12) über ein Zugriffsprotokoll verfügen, das zu jedem Zeitpunkt immer nur einer Bedieneinheit (14, 16, 18) einen Zugriff auf die Datenbank (10) erlaubt.

2. Bussystem nach Anspruch 1, **dadurch gekennzeichnet, dass** das Funktionsmodul (12) in einer Bedieneinheit(14, 16, 18) integriert ist.

3. Bussystem nach Anspruch 2, **dadurch gekennzeichnet, dass** die wenigstens eine Bedieneinheit (14, 16, 18) über einen Buskoppler (6) mit dem Datenbus (4) gekoppelt ist.

4. Bussystem nach Anspruch 3, **dadurch gekennzeichnet, dass** wenigstens ein Buskoppler (6) und die wenigstens eine Bedieneinheit (14, 16, 18) über eine drahtlose Verbindung (7) gekoppelt sind.

5. Bussystem nach Anspruch 4, **dadurch gekennzeichnet, dass** die drahtlose Verbindung (7) über eine Infrarotübertragung oder über Funkwellenübertragung hergestellt ist.

6. Bussystem nach Anspruch 3, **dadurch gekennzeichnet, dass** Buskoppler (6) und Bedieneinheit (14, 16, 18) über eine Zweidrahtleitung oder über einen Lichtwellenleiter miteinander gekoppelt sind.

7. Bussystem nach Anspruch 6, **dadurch gekennzeichnet, dass** jede Bedieneinheit (14, 16, 18) einen unterbrechungsfreien Zugang zum Datenbus (4) aufweist.

8. Bussystem nach Anspruch 6, **dadurch gekennzeichnet, dass** das Funktionsmodul (12) einen unterbrechungsfreien Zugang zum Datenbus (4) aufweist.

9. Bussystem nach einem der vorhergehenden Ansprüche, **dadurch gekennzeichnet, dass** jede Bedieneinheit (14, 16, 18) über eine Mikrocontrollerschaltung verfügt, die alle spezifischen Einstellungen und Daten für alle Bedieneinheiten (14, 16, 18) zentral zur Verfügung stellt.

10. Bussystem nach einem der vorhergehenden Ansprüche, **dadurch gekennzeichnet, dass** das Funktionsmodul (12) Anzeigeelemente zur Visualisierung eines Betriebszustandes, eines Fehlerstatus und/oder eines Kommunikationsstatus aufweist.

11. Bussystem nach einem der vorhergehenden Ansprüche, **dadurch gekennzeichnet, dass** das Funktionsmodul (12) Bedienelemente zur Beeinflussung des aktuellen Betriebszustandes und/oder zur Beeinflussung des aktuellen Kommunikationsstatus aufweist.

12. Bussystem nach einem der vorhergehenden Ansprüche, **dadurch gekennzeichnet, dass** die Datenbank (10) einen nicht flüchtigen Speicher aufweist.

13. Bussystem nach einem der vorhergehenden Ansprüche, **dadurch gekennzeichnet, dass** die Datenbank (10) einen programmierbaren Speicher aufweist.

14. Verfahren zum Betrieb eines Bussystems einer Hausautomatisierungseinrichtung nach einem der vorhergehenden Ansprüche zur Kommunikation zwischen wenigstens einem Funktionsmodul (12) und wenigstens einer Bedieneinheit (14, 16, 18) und zur Übertragung von Datensignalen zwischen diesen, **dadurch gekennzeichnet, dass** die Bedieneinheiten (14, 16, 18) und das Funktionsmodul (12) über ein Zugriffsprotokoll verfügen, das zu jedem Zeitpunkt immer nur einer Bedieneinheit (14, 16, 18) über einen Datenbus (4) einen Zugriff auf eine Datenbank (10) im Funktionsmodul (12) erlaubt.

15. Verfahren nach Anspruch 14, **dadurch gekennzeichnet, dass** jede der wenigstens einen Bedieneinheiten (14, 16, 18) vor einer Kommunikation mit dem Funktionsmodul (12) eine Kommunikationsberechtigung zugeteilt bekommt.

16. Verfahren nach Anspruch 15, **dadurch gekennzeichnet, dass** zur Zuteilung einer Kommunikationsberechtigung eine der Bedieneinheiten (14, 16, 18) eine Anfrage (Request) über den Datenbus (4) zum Funktionsmodul sendet.

17. Verfahren nach Anspruch 16, **dadurch gekennzeichnet, dass** das Funktionsmodul (12) eine Freigabe zu der anfragenden Bedieneinheit (14,16,18) sendet, wenn es gerade nicht mit einer anderen der Bedieneinheiten kommuniziert.

18. Verfahren nach Anspruch 16, **dadurch gekennzeichnet, dass** das Funktionsmodul (12) eine Zurückweisung zu der anfragenden Bedieneinheit (14, 16, 18) sendet, wenn es gerade mit einer anderen der Bedieneinheiten kommuniziert.

19. Verfahren nach einem der vorhergehenden Ansprüche, **dadurch gekennzeichnet, dass** der Datenbestand der Datenbank (10) in kleine Dateneinheiten (DE) unterteilt ist, die jeweils mit einem Statuskennzeichen (Updateflag) versehen sind.

20. Verfahren nach Anspruch 19, **dadurch gekennzeichnet, dass** eine Dateneinheit (DE) bei einem veränderten Datenbestand über eine Kennung für die Bedieneinheit (12, 14, 16) verfügt.

21. Verfahren nach Anspruch 20, **dadurch gekennzeichnet, dass** jede der Bedieneinheiten (14, 16, 18) permanent den aktuellen und/oder aktualisierten Datenbestand aus dem Funktionsmodul (12) abfragen kann.

22. Verfahren nach Anspruch 21, **dadurch gekennzeichnet, dass** jede der Bedieneinheiten jede veränderte Dateneinheit (DE) ermitteln kann und diese dann einzeln nachlädt.

## Claims

1. Bus system, having a data bus for transferring signals between at least two modules which can be coupled to the data bus, particularly a bus system in a building automation device, where the data bus (4) is coupled to at least one functional module (12) and to at least one control unit (14, 16, 18) which has at least one sensor and/or at least one actuator, the functional module (12) having uninterrupted access to the data bus (4), the functional module (12) having a database (10), the database (10) storing descriptions for additional appliance properties, **characterized in that** the control units (14, 16, 18) and the functional module (12) have an access protocol which only ever permits access to the database (10) by one control unit (14, 16, 18) at any time.

2. Bus system according to Claim 1, **characterized in that** the functional module (12) is integrated in a control unit (14, 16, 18).

3. Bus system according to Claim 2, **characterized in that** the at least one control unit (14, 16, 18) is coupled to the data bus (4) by means of a bus coupler (6).

4. Bus system according to Claim 3, **characterized in that** the at least one bus coupler (6) and the at least one control unit (14, 16, 18) are coupled by means of a wireless connection (7).

5. Bus system according to Claim 4, **characterized in that** the wireless connection (7) has been set up by means of an infrared transmission or by means of radio wave transmission.

6. Bus system according to Claim 3, **characterized in that** the bus coupler (6) and the control unit (14, 16, 18) are coupled to one another by means of a two-wire line or by means of an optical fibre.

7. Bus system according to Claim 6, **characterized in that** each control unit (14, 16, 18) has uninterrupted access to the data bus (4).

8. Bus system according to Claim 6, **characterized in that** the functional module (12) has uninterrupted access to the data bus (4).

9. Bus system according to one of the preceding claims, **characterized in that** each control unit (14, 16, 18) has a microcontroller circuit which makes all specific settings and data available to all control units (14, 16, 18) centrally.

10. Bus system according to one of the preceding claims, **characterized in that** the functional module (12) has display elements for visualizing an operating state, an error status and/or a communication status.

11. Bus system according to one of the preceding claims, **characterized in that** the functional module (12) has control elements for influencing the present operating state, and/or for influencing the present communication status.

12. Bus system according to one of the preceding claims, **characterized in that** the database (10) has a non-volatile memory.

13. Bus system according to one of the preceding claims, **characterized in that** the database (10) has a programmable memory.

14. Method for operating a bus system in a building automation device according to one of the preceding claims for communication between at least one functional module (12) and at least one control unit (14, 16, 18) and for transferring data signals between these, **characterized in that** the control units (14, 16, 18) and the functional module (12) have an access protocol which only ever permits access to a database (10) in the functional module (12) via a data bus (4) by one control unit (14, 16, 18) at any time.

15. Method according to Claim 14, **characterized in that** each of the at least one control units (14, 16, 18) is allocated communication authorization prior to communication with the functional module (12).

16. Method according to Claim 15, **characterized in that** one of the control units (14, 16, 18) sends a request to the functional module via the data bus (4) in order to allocate communication authorization.

17. Method according to Claim 16, **characterized in that** the functional module (12) sends a release to the requesting control unit (14, 16, 18) if it is currently not communicating with another of the control units.

18. Method according to Claim 16, **characterized in that** the functional module (12) sends a rejection to the requesting control unit (14, 16, 18) if it is currently communicating with another of the control units.

19. Method according to one of the preceding claims, **characterized in that** the stock of data in the database (10) has been divided into small data units (DE) which have each been provided with a status identification (update flag).

20. Method according to Claim 19, **characterized in that** a data unit (DE) has an identifier for the control unit (12, 14, 16) when a stock of data has been altered.

21. Method according to Claim 20, **characterized in that** each of the control units (14, 16, 18) can permanently request the present and/or updated stock of data from the functional module (12).

22. Method according to Claim 21, **characterized in that** any of the control units can ascertain any altered data unit (DE) and then individually reload it.

## Revendications

1. Système de bus comportant un bus de données pour transmettre des signaux entre au moins deux modules pouvant être couplés au bus de données, notamment système de bus d'une installation de domotique, le bus de données (4) étant couplé à au moins un module de fonction (12) et au moins une unité de commande (14, 16, 18) ayant au moins un capteur et/ou au moins un actionneur, le module de fonction (12) ayant un accès au bus de données (4) qui ne peut être interrompu,
le module de fonction (12) comportant une banque de données (10), des descriptions de propriétés complémentaires des appareils étant mises en mémoire dans la banque de données (10),
**caractérisé en ce que**
les unités de commande (14, 16, 18) et le module de fonction (12) disposent d'un protocole d'accès qui permet à tout instant, à une unité de commande (14, 16, 18), d'accéder à la banque de données (10).

2. Système de bus selon la revendication 1,
**caractérisé en ce que**
le module de fonction (12) est intégré dans une unité de commande (14, 16, 18).

3. Système de bus selon la revendication 2,
caractérisé en ce
que l'au moins une unité de commande (14, 16, 18) est couplée au bus de données (4) par un coupleur de bus (6).

4. Système de bus selon la revendication 3,
caractérisé en ce
que l'au moins un coupleur de bus (6) et l'au moins une unité de commande (14, 16, 18) sont couplés par une liaison sans fil (7).

5. Système de bus selon la revendication 4,
**caractérisé en ce que**
la liaison sans fil (7) est réalisée par une transmission par infrarouge ou une transmission radio.

6. Système de bus selon la revendication 3,
**caractérisé en ce que**
le coupleur de bus (6) et l'unité de commande (14, 16, 18) sont couplés l'un à l'autre par une ligne à deux fils ou par un guide de lumière.

7. Système de bus selon la revendication 6,
**caractérisé en ce que**
chaque unité de commande (14, 16, 18) présente un accès au bus de données (4) qui ne peut être interrompu.

8. Système de bus selon la revendication 6,
**caractérisé en ce que**
le module de fonction (12) présente un accès au bus de données (4) qui ne peut être interrompu.

9. Système de bus selon l'une des revendications précédentes,
**caractérisé en ce que**
chaque unité de commande (14, 16, 18) comporte un circuit à microcontrôleur qui fournit tous les réglages spécifiques et toutes les données spécifiques à toutes les unités de commande (14, 16, 18) d'une manière centralisée.

10. Système de bus selon l'une des revendications précédentes,
**caractérisé en ce que**
le module de fonction (12) comporte des éléments d'affichage pour visualiser un état de fonctionnement, un état de défaut et/ou un état de communication.

11. Système de bus selon l'une des revendications précédentes,
**caractérisé en ce que**
le module de fonction (12) comporte des éléments de commande pour influencer l'état de fonctionnement actuel et/ou l'état de communication actuel.

12. Système de bus selon l'une des revendications précédentes,
**caractérisé en ce que**
la banque de données (10) comporte une mémoire non volatile.

13. Système de bus selon l'une des revendications précédentes,
**caractérisé en ce que**
la banque de données (10) comporte une mémoire programmable .

14. Procédé de fonctionnement d'un système de bus d'une installation de domotique selon l'une des revendications précédentes pour assurer la communication entre au moins un module de fonction (12) et au moins une unité de commande (14, 16, 18) et transmettre des signaux de données entre ceux-ci,
**caractérisé en ce que**
les unités de commande (14, 16, 18) et le module de fonction (12) disposent d'un protocole d'accès qui permet à tout instant, toujours seulement à une unité de commande (14, 16, 18), d'accéder par un bus de données (4) à une banque de données (10) dans le module de fonction (12).

15. Procédé selon la revendication 14,
**caractérisé en ce que**
chacune de la ou des unités de commande (14, 16, 18) reçoit par attribution une autorisation de communication avant toute communication avec le module de fonction (12).

16. Procédé selon la revendication 15,
**caractérisé en ce que**
l'une des unités de commande (14, 16, 18) envoie une demande (requête) par le bus de données (4) vers le module de fonction pour l'attribution d'une autorisation de communication.

17. Procédé selon la revendication 16,
**caractérisé en ce que**
le module de fonction (12) envoie une libération à l'unité de commande (14, 16, 18) qui effectue la demande s'il ne communique pas à ce moment avec une autre des unités de commande.

18. Procédé selon la revendication 16,
**caractérisé en ce que**
le module de fonction (12) envoie un refus à l'unité de commande (14, 16, 18) qui effectue ; la demande s'il communique à ce moment avec une autre des unités de commande.

19. Procédé selon l'une des revendications précédentes,
**caractérisé en ce que**
l'état de données de la banque de données (10) est subdivisé en petites unités de données (DE) munies chaque fois d'une caractéristique d'état (drapeau de mise à jour).

20. Procédé selon la revendication 19,
caractérisé en ce
qu'en cas d'état de données modifié, une unité de données (DE) dispose d'une caractéristique pour l'unité de commande (12, 14, 16).

21. Procédé selon la revendication 20,
**caractérisé en ce que**
chacune des unités de commande (14, 16, 18) peut interroger en permanence l'état de données actuel et/ou actualisé à partir du module de fonction (12) .

22. Procédé selon la revendication 21,
**caractérisé en ce que**
chacune des unités de commande peut déterminer toute unité de données modifiée (DE) et la recharger alors séparément.
